(19) Europäisches Patentamt / European Patent Office / Office européen des brevets

(11) **EP 1 886 100 B1**

(12) **EUROPÄISCHE PATENTSCHRIFT**

(45) Veröffentlichungstag und Bekanntmachung des Hinweises auf die Patenterteilung:
**08.07.2009 Patentblatt 2009/28**

(21) Anmeldenummer: **06755077.2**

(22) Anmeldetag: **08.05.2006**

(51) Int Cl.:
*G01F 1/84* (2006.01)

(86) Internationale Anmeldenummer:
**PCT/EP2006/062132**

(87) Internationale Veröffentlichungsnummer:
**WO 2006/128774 (07.12.2006 Gazette 2006/49)**

(54) **CORIOLIS DURCHFLUSSMESSER UND VERFAHREN ZUR DURCHFLUSSMESSUNG**

CORIOLIS FLOWMETER AND METHOD FOR FLOW MEASUREMENT

DÉBITMÈTRE DE CORIOLIS ET PROCÉDÉ DE MESURE DE DÉBIT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.05.2005 DE 102005025395**

(43) Veröffentlichungstag der Anmeldung:
**13.02.2008 Patentblatt 2008/07**

(73) Patentinhaber: **Endress+Hauser Flowtec AG**
**4153 Reinach (CH)**

(72) Erfinder:
• **MATT, Christian**
  **CH- 4147 Aesch (CH)**
• **KUTTLER, Daniel**
  **CH-4053 Basel (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A- 6 073 495**          **US-A1- 2004 025 599**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Coriolis Durchflussmesser und ein Verfahren zur Durchflussmessung.

Coriolis Durchflussmesser werden in der industriellen Messtechnik zur Messung eines Durchflusses eines Mediums, z.B. einer Flüssigkeit oder eines Gases, in einem Rohrleitungsabschnitt eingesetzt.

Coriolis Durchflussmesser weisen ein Messrohr auf, das sich im Messbetrieb in dem Rohrleitungsabschnitt befindet und von dem Medium durchströmt wird. Das Messrohr wird in Schwingungen versetzt. Die Schwingung des Messrohres wird durch die hindurchströmende Flüssigkeit beeinflusst. Messrohr und Flüssigkeit bilden zusammen ein schwingungsfähiges System, das in der Regel auf seiner Resonanzfrequenz angeregt wird. Die resultierende Schwingungsbewegung des Messrohrs wird üblicherweise durch zwei am Messrohr angeordnete Schwingungssensoren erfasst, deren Sensorsignale von einer Signalverarbeitung aufgenommen und aufbereitet werden. Anhand der aufbereiteten Sensorsignale wird der Durchfluss bestimmt. Die Sensorsignale weisen eine Frequenz auf, die gleich einer Frequenz der Schwingung des Messrohres ist. Sie sind jedoch gegeneinander phasenverschoben. Die Phasenverschiebung ist ein Maß für den Durchfluss des Mediums im Messrohr.

Fig. 1 zeigt einen Messaufnehmer eines Coriolis Durchflussmessers, wie er beispielsweise in der EP A1 1 298 421 beschrieben ist.

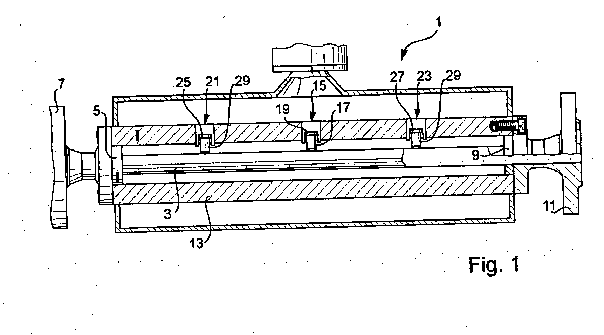

Der Messaufnehmer 1 ist im Messbetrieb in einer in Fig. 1 nicht dargestellten Rohrleitung angeordnet, durch die das Medium fließt, dessen Durchfluss gemessen werden soll. Der Messaufnehmer 1 weist ein einziges gerades Messrohr 3 auf, das einlassseitig über eine Endplatte 5 an einem Flansch 7 und auslassseitig über eine Endplatte 9 an einem Flansch 11 fixiert ist. Die Flansche 7, 11 und die Endplatten 5, 9 sind an oder in einem Trägerrohr 13 befestigt.

Die nachfolgend beschriebene Erfindung ist nicht auf diesen speziellen Messaufnehmer 1 mit einem einzigen geraden Messrohr 3 beschränkt. Sie kann auch in Verbindung mit weiteren bekannten Messaufnehmern eingesetzt werden. Zu erwähnen sind z.B. Messaufnehmer mit einem Messrohr mit Auslegermasse, wie z.B. in der EP-A 97810559 beschrieben, Messaufnehmer mit einem gebogenen Messrohr, wie z.B. in der EP-A 96 10 942 beschrieben, sowie Messaufnehmer mit zwei parallelen, geraden oder gebogenen Messrohren, wie sie z.B. in der US-A 4,793,191 oder der US-A 4,127,028, beschrieben sind.

Das Messrohr 3 wird im Messbetrieb zu Schwingungen angeregt. Zur Erzeugung der Messrohrschwingung ist in der Mitte zwischen den beiden Endplatten 5, 9 am Messrohr 3 ein Schwingungserreger 15 angeordnet.

Als Schwingungserreger 15 eignet sich z.B. ein elektromagnetischer Antrieb bestehend aus einem Permanentmagnet 17 und einer Spule 19. Die Spule 19 ist am Trägerrohr 13 und der Permanentmagnet 17 ist am Messrohr 3 befestigt. Über einen in der Spule 19 fließenden Strom lassen sich Amplitude und Frequenz einer in der Zeichenebene verlaufenden Biegeschwingung des Messrohrs 3 steuern. Das Schwingungsgebilde wird dabei vorzugsweise in Resonanz betrieben.

Wenn da Medium durch das Messrohr 3 fließt, treten in der Zeichenebene Coriolis Kräfte auf, die bewirken, dass nicht alle Punkte entlang des Messrohrs 3 in Phase schwingen. Die Schwingung des Messrohrs 3 wird mit Hilfe von einem ersten und einem zweiten Sensor 21, 23 erfasst. Die Sensoren 21, 23 sind vorzugsweise symmetrisch zum Schwingungserreger 15 angeordnet. Als Sensoren 21, 23 eignen sich z.B. elektromagnetische Wandler, die jeweils eine am Trägerrohr 13 befestigte Spule 25, 27 und einen am Messrohr 3 angeordneten Permanentmagneten 29 aufweisen. Eine Bewegung des Messrohrs 3 bewirkt eine Bewegung der Permanentmagnete 29 in den Spulen 25, 27 und damit eine Induktionsspannung in der jeweiligen Spule 25, 27. Die Induktionsspannungen können über die Spulen 25, 27 abgegriffen werden und stehen hierüber als von den Sensoren 21, 23 erzeugte erste und ein zweite analoge Sensorsignale S1, S2 zur Verfügung. Die beiden Sensorsignale S1, S2 weisen die gleiche Frequenz $f_s$ auf und sind gegeneinander phasenverschoben. Die zwischen den Sensorsignalen S1, S2 bestehende Phasendifferenz ist ein Maß für den Durchfluss. Die Frequenz $f_s$ liegt typischer Weise in der Größenordnung von einigen Hundert Hertz.

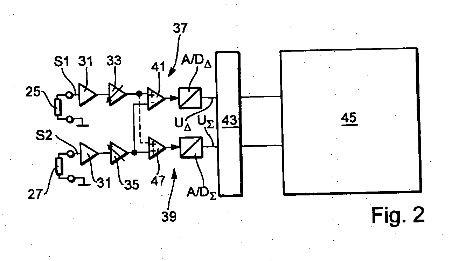

Fig. 2 zeigt als Beispiel eine mögliche Form der Signalverarbeitung, wie sie heute bereits in Coriolis Durchflussmessern zum Einsatz kommt.

Dabei werden die Sensorsignale S1, S2 analog vorverarbeitet, anschließend digitalisiert und digital der Durchfluss ermittelt.

Jedes der Sensorsignale S1, S2 ist über einem Impedanzwandler 31 mit einer Verstärkung g, z.B. von g = 1, einem Vorverstärker 33, 35 zugeführt. Der Vorverstärker 35 verstärkt das eingehende zweite Sensorsignal S1 mit einer wählbaren aber festen Verstärkung $g_{v2}$, die typischer Weise zwischen 3 und 10 liegt. Der Vorverstärker 33 weist eine Verstärkung $g_{v1}$ auf. Die Verstärkung $g_{v1}$, die das erste Sensorsignals S1 hierdurch erfährt, wird durch den Vorverstärker 33 derart nachgeregelt, dass ein durch einen Amplitudenunterschied auf der Arbeitsfrequenz der Sensorsignale S1, S2 bedingter Anteil einer Differenz der beiden Sensorsignal S1, S2 verschwindet. Die vorverstärkten Sensorsignale S1, S2 weisen damit die gleiche Amplitude auf und unterscheiden sich durch deren vom Durchfluss abhängige Phase.

An die beschriebene Vorverarbeitungsschaltung schließen sich ein erster und ein zweiter Signalverarbeitungszweig 37, 39 an. Der erste Signalverarbeitungszweig 37 umfasst einen Differenzverstärker 41 an dessen Eingängen die impedanzgewandelten vorverstärkten Sensorsignale S1, S2 anliegen. Der Differenzverstärker 41 weist eine in der Regel zweistellige Verstärkung $g_\Delta$ auf, z.B. $g_\Delta = 27$. Am Ausgang steht damit ein erstes Messsignal $U_\Delta$ zur Verfügung, das einer verstärkten Differenz der Sensorsignale S1, S2 entspricht. Dieses erste Messsignal $U_\Delta$ wird mittels eines im ersten Signalverarbeitungszweig 37 anschließenden Analog-Digital Wandler $A/D_\Delta$

digitalisiert und z.B. über ein Interface 43 einer digitalen Signalverarbeitung 45 zugeführt. Dabei kann der Analog-Digital Wandler $A/D_\Delta$ eine von 1 verschiedene Verstärkung $g_{A/D\Delta}$ aufweisen.

Der zweite Signalverarbeitungszweig 39 umfasst einen Addierer 47 an dessen Eingängen die impedanzgewandelten vorverstärkten Sensorsignale S1, S2 anliegen. Der Addierer 47 weist typischer Weise eine Verstärkung $g_\Sigma$ von $g_\Sigma = 1$ auf. Am Ausgang steht damit ein zweites Messsignal $U_\Sigma$ zur Verfügung, das der Summe der Sensorsignale S1, S2 entspricht. Das zweite Messsignal $U_\Sigma$ wird mittels eines im zweiten Signalverarbeitungszweig 39 anschließenden Analog-Digital Wandler $A/D_\Sigma$ digitalisiert und z.B. über das Interface 43 der digitalen Signalverarbeitung 45 zugeführt. Auch hier kann der Analog-Digital Wandler $A/D_\Sigma$ eine von 1 verschiedene Verstärkung $g_{A/D\Sigma}$ aufweisen.

Sofern ein zu messender Phasenwinkel zwischen den Sensorsignalen S1, S2 einen Bereich von einigen zehn Millirad nicht überschreitet, kann auf die Addition verzichtet werden, ohne dass es zu signifikanten Fehlern kommt. In dem Fall wäre im zweiten Signalverarbeitungszweig 39 anstelle des Addierers 47 einen Verstärker mit einer Verstärkung von $g_\Sigma$, z.B. $g_\Sigma = 2$, vorzusehen und das zweite Messsignal $U_\Sigma$ entspräche dem verstärkten zweiten Sensorsignal S2. Die in Fig. 2 gestrichelt eingezeichnete Linie, die die Addition der Sensorsignale S1, S2 veranschaulicht würde dann entfallen.

In der digitalen Signalverarbeitung 45 wird nachfolgend der Betrag des zweiten Messsignals $U_\Sigma$ und ein Realteil $Re(U_\Delta)$ und ein Imaginärteil $Im(U_\Delta)$ des ersten Messsignals $U_\Delta$ bestimmt. Der Realteil $Re(U_\Delta)$ des ersten Messsignals $U_\Delta$ wird über die regelbare Verstärkung $g_{V1}$ auf Null geregelt. Schlussendlich wird mittels der digitalen Signalverarbeitung 45 der Durchfluss M bestimmt. Dieser kann beispielsweise wie folgt berechnet werden:

$M = k\ Im\ (U_\Delta)\ g_\Sigma\ G_{AD\Sigma}$

$|U_\Sigma|\ f_s\ g_\Delta\ g_{AD\Delta}$

wobei k eine Proportionalitätskonstante

$f_s$ die Frequenz der Sensorsignale bedeuten.

Dabei haben die Verstärkungen $g_\Sigma$, $g_{AD\Sigma}$, $g_\Delta$, $g_{AD\Delta}$,

der einzelnen Komponenten des ersten und des zweiten Signalverarbeitungszweiges 37, 39 einen unmittelbaren Einfluss auf den berechneten Durchfluss M. Geht man davon aus, dass diese Verstärkungen konstant sind, so genügt es diese Konstanten, z.B. im Rahmen einer Kalibration des Durchflussmessers, implizit abzugleichen und zu speichern, so dass bei der Berechnung des Durchflusses M die Gesamtverstärkung, wie in der oben angegeben Formel, zu 1 normiert wird.

Untersuchungen haben gezeigt, dass dies ausreichend ist, wenn sich das Verhältnis der Verstärkungen des ersten und des zweiten Signalverarbeitungszweiges 37, 39 nicht verändert. Verändert sich das Verhältnis, z.B. weil die Verstärkung einzelner oder meh rer Komponenten z.B. über die Zeit und die Temperatur driften, so führt dies zu einer Messungenauigkeit für die Bestimmung des Durchflusses M, die in der Regel nur durch aufwendige Kalibrationen reduziert werden kann. US 2004/0025599 beschreibt die Signalverarbeitung in einem Coriolis Durchflussmesser.

Es ist eine Aufgabe der Erfindung einen Coriolis Durchflussmesser anzugeben, der eine hohe Messgenauigkeit ermöglicht.

Hierzu besteht die Erfindung in einem Coriolis Durchflussmesser mit

[0027] - mindestens einem Messrohr, das im Messbetrieb zu Schwingungen angeregt

wird und von eine Medium durchströmt wird, deren Durchfluss zu

messen ist,

[0030] - einem ersten und einem zweiten Sensor zur Erfassung einer vom

Durchfluss abhängigen Schwingung des Messrohrs und zur

Erzeugung eines ersten und eines zweiten Sensorsignals,

[0033] - einem Referenzsignal-Generator, der dem zweiten Sensorsignal ein

Referenzsignal überlagert,

[0035] - einem ersten Signalverarbeitungszweig,

-- der anhand des ersten Sensorsignals und eines durch die

Überlagerung des zweiten Sensorsignals mit dem Referenzsignal

gebildeten Hilfssignals ein erstes Signal ableitet und aufbereitet,

das einer Differenz des ersten Sensorsignals und des Hilfssignals

entspricht,

[0041] - einem zweiten Signalverarbeitungszweig, der anhand des Hilfssignals oder

anhand des ersten Sensorsignals und des Hilfssignals ein zweites Signal

ableitet und aufbereitet,

[0044] - zwei Sätze von jeweils zwei Filtern, von denen ein

erster dazu dient, aus dem aufbereiteten ersten Signal ein aufbereitetes erstes

Referenzsignal und ein einer Differenz der Sensorsignale entsprechendes

erstes Messsignal heraus zu filtern, und von denen ein zweiter dazu dient, aus

dem aufbereiteten zweiten Signal ein aufbereitetes zweites Referenzsignal

und ein zweites Messsignal heraus zu filtern,

**[0050]** - Mittel, die anhand des ersten und des zweiten aufbereiteten

Referenzsignals ein Verhältnis der Verstärkungen des

ersten und des zweiten Signalverarbeitungszweiges ermitteln, und

**[0053]** - Mittel zur Bestimmung des Durchflusses anhand des ersten und

des zweiten Messsignals, die das Verhältnis der Verstärkungen

berücksichtigen.

Gemäß einer Ausgestaltung ist das zweite Signal gleich einer Summe des ersten Sensorsignals und des Hilfssignals, oder ein Phasenwinkel zwischen dem ersten und dem zweiten Sensorsignal beträgt weniger als einige zehn Millirad und das zweite Signal ist gleich dem Hilfssignal.

Gemäß einer weiteren Ausgestaltung weist der erste Signalverarbeitungszweig einen Differenzverstärker und einen Analog-Digitalwandler auf, und der zweite Signalverarbeitungszweig weist einen Addierer oder einen Verstärker und einen Analog-Digitalwandler auf.

Gemäß einer Weiterbildung weisen die Sensoren jeweils eine Spule auf, der Referenzsignal-Generator ist mit einem ersten Anschluss der Spule des zweiten Sensors verbunden, und ein zweiter Anschluss dieser Spule ist mit einem Eingang des zweiten Signalverarbeitungszweig verbunden.

Gemäß einer Ausgestaltung sind zwischen dem zweiten Anschluss der Spule des ersten Sensors und dem Eingang des ersten Signalverarbeitungszweigs ein Impedanzwandler und ein Vorverstärker angeordnet, eine Vorverstärkung des ersten Sensorsignals ist derart geregelt, dass ein Realteil des ersten Messsignals verschwindet, und zwischen dem zweiten Anschluss der Spule des zweiten Sensors und dem Eingang des zweiten Signalverarbeitungszweigs ist ein Impedanzwandler und ein Vorverstärker mit einer vorgegebenen Verstärkung angeordnet.

Gemäß einer Weiterbildung ist dem zweiten Signalverarbeitungszweig ein Summen- oder ein Differenzverstärker vorgeschaltet, an dessen Eingängen das zweite Sensorsignal und das Referenzsignal anliegen, und an dessen Ausgang das Hilfssignal zur Verfügung steht.

Weiter besteht die Erfindung in einem Coriolis-Durchflussmesser mit

**[0062]** - mindestens einem Messrohr, das im Messbetrieb zu Schwingungen angeregt

wird und von einem Medium durchströmt wird, dessen Durchfluss zu

messen ist,

**[0065]** - einem ersten und einem zweiten Sensor zur Erfassung einer

vom Durchfluss abhängigen Schwingung des Messrohrs und zur

Erzeugung eines ersten und eines zweiten Sensorsignals,

**[0068]** - einem Referenzsignal-Generator, der dem ersten Sensorsignal

ein Referenzsignal überlagert,

**[0070]** - einem ersten Signalverarbeitungszweig,

-- der anhand eines durch die Überlagerung des ersten Sensorsignals mit

dem Referenzsignal gebildeten Hilfssignals und des zweiten Sensorsignals

ein erstes Signal ableitet und aufbereitet, das einer Differenz des

Hilfssignals und des zweiten Sensorsignals entspricht,

**[0075]** - einem zweiten Signalverarbeitungszweig,

-- der anhand des Hilfssignals oder anhand des Hilfssignals und des zweiten

Sensorsignals des ein zweites Signal ableitet und aufbereitet,

**[0078]** - zwei Sätze von jeweils zwei Filtern,

von denen ein erster dazu dient, aus dem aufbereiteten ersten

Signal ein aufbereitetes erstes Referenzsignal und ein einer Differenz

der Sensorsignale entsprechendes erstes Messsignal heraus zu filtern,

und von denen ein zweiter dazu dient, aus dem aufbereiteten zweiten

Signal ein aufbereitetes zweites Referenzsignal und ein zweites

Messsignal heraus zu filtern,

**[0085]** - Mittel, die anhand des ersten und des zweiten aufbereiteten

Referenzsignals ein Verhältnis der Verstärkungen des

ersten und des zweiten Signalverarbeitungszweiges ermitteln, und

**[0088]** - Mittel zur Bestimmung des Durchflusses anhand des ersten und

des zweiten Messsignals, die das Verhältnis der Verstärkungen

berücksichtigen.

Weiter besteht die Erfindung in einem Verfahren zur Bestimmung eines Verhältnisses von Verstärkungen von zwei getrennten Signalverarbeitungszweigen eines Coriolis Durchflussmessers,

**[0092]** - der einen ersten und einen zweiten Sensor zur Erfassung einer

vom Durchfluss abhängigen Schwingung eines Messrohrs und

zur Erzeugung eines ersten und eines zweiten Sensorsignals

aufweist, bei dem entweder

**[0096]** - dem zweiten Sensorsignal ein Referenzsignal überlagert wird,

**[0097]** - in dem ersten Signalverarbeitungszweig ein erstes Signal abgeleitet und

aufbereitet wird, dass einer Differenz des ersten Sensorsignals und eines

durch die Überlagerung des zweiten Sensorsignals mit dem Referenzsignal

gebildeten Hilfssignals entspricht,

**[0101]** - in dem zweiten Signalverarbeitungszweig ein zweites Signal abgeleitet und

aufbereitet wird, dass einer Summe des ersten Sensorsignals und des

Hilfssignals oder dem Hilfssignal entspricht, oder

**[0104]** - dem ersten Sensorsignal ein Referenzsignal überlagert wird,

**[0105]** - in dem ersten Signalverarbeitungszweig ein erstes Signal abgeleitet und

aufbereitet wird, dass einer Differenz eines durch die Überlagerung des ersten

Sensorsignals mit dem Referenzsignal gebildeten Hilfssignals und des zweiten

Sensorsignals entspricht,

**[0109]** - in dem zweiten Signalverarbeitungszweig ein zweites Signal abgeleitet und

aufbereitet wird, dass einer Summe des Hilfssignals und des zweiten

Sensorsignals oder dem Hilfssignal entspricht, und bei dem

**[0112]** - aus dem ersten und dem zweiten Signal ein erstes und ein zweites

aufbereitetes Referenzsignal heraus gefiltert wird, und

**[0114]** - anhand der aufbereiteten Referenzsignale ein Verhältnis der Verstärkungen

der Signalverarbeitungszweige bestimmt wird.

Weiter besteht die Erfindung in einem Verfahren zur Bestimmung eines Durchflusses mit einem erfindungsgemäßen Coriolis Durchflussmesser, bei dem der Durchfluss proportional zu einem Verhältnis eines Imaginärteiles des ersten Messsignals und einem Betrag des zweiten Messsignals und umgekehrt proportional zu dem Verhältnis der Verstärkungen ist.

Gemäß einer Weiterbildung des Verfahrens wird das Verhältnis der Verstärkungen mehrfach bestimmt, und der Durchfluss anhand eines Mittelwertes der Verhältnisse bestimmt.

Gemäß einer weiteren Weiterbildung wird das Verhältnis der Verstärkungen mehrfach bestimmt. Es wird eine Verteilung der Verhältnisse bestimmt, und der Durchfluss nur dann anhand eines Mittelwertes der Verhältnisse bestimmt wird, wenn die Verhältnisse normal verteilt sind und eine Standardabweichung der Verhältnisse unterhalb eines vorgegebenen Wertes liegt.

Gemäß einer Weiterbildung des Verfahrens ist im Durchflussmessgerät ein Referenzwert für das Verhältnis der Verstärkungen abgespeichert. Es wird das gemessene Verhältnis der Verstärkungen mit dem Referenzwert verglichen, und bei Bestehen einer Abweichung eine Kompensation vorgenommen.

Ein Vorteil der Erfindung besteht darin, dass das Verhältnis der Verstärkungen der beiden Signalverarbeitungszweige permanent überwacht wird. Eine aufwendige Kalibration der Signalverarbeitungszweige und deren Implementierung und Umsetzung im Gerät wird hierdurch überflüssig.

Die Erfindung und weitere Vorteile werden nun anhand der Figuren der Zeichnung, in denen vier Ausführungsbeispiele dargestellt sind, näher erläutert; gleiche Teile sind in den Figuren mit gleichen Bezugszeichen versehen.

Fig. 1 zeigt einen Messaufnehmer eines Coriolis Durchflussmessers;

Fig. 2 zeigt eine herkömmliche Signalverarbeitung eines Coriolis

Durchflussmessers;

Fig. 3 zeigt eine erfindungsgemäße Signalverarbeitung eines Coriolis

Durchflussmessers, bei der ein Referenzsignal-Generator

an die Spule des zweiten Sensors angeschlossen ist.;

Fig. 4 zeigt eine weitere erfindungsgemäße Signalverarbeitung eines Coriolis

Durchflussmessers, bei der das Referenzsignal dem zweiten

Sensorsignal über einen Differenzverstärker überlagert wird;

Fig. 5 zeigt eine erfindungsgemäße Signalverarbeitung eines Coriolis

Durchflussmessers, bei der ein Referenzsignal-Generator

an die Spule des ersten Sensors angeschlossen ist; und

Fig. 6 zeigt eine weitere erfindungsgemäße Signalverarbeitung eines Coriolis

Durchflussmessers, bei der das Referenzsignal dem ersten

Sensorsignal über einen Differenzverstärker überlagert wird.

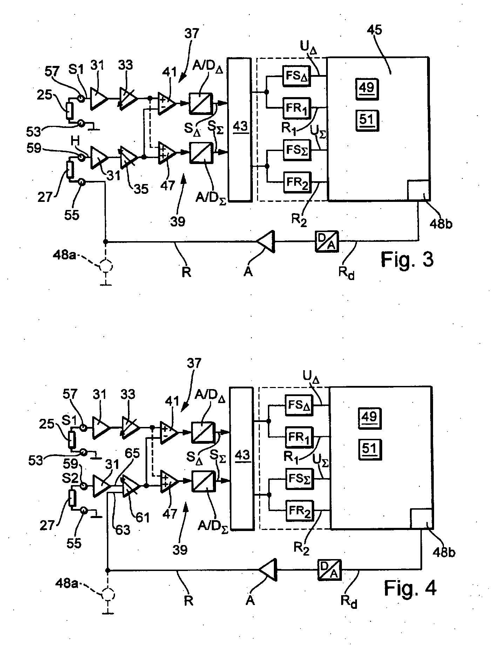

Die Erfindung betrifft einen Coriolis Durchflussmesser mit einem Messaufnehmer und einer Signalverarbeitung und ist nachfolgend aufbauend auf den in Fig. 1 dargestellten Messaufnehmers und die in Fig. 2 dargestellte Signalverarbeitung näher beschrieben. Fig. 3 und Fig. 4 zeigen jeweils ein Beispiel einer Signalverarbeitung eines erfindungsgemäßen Coriolis Durchflussmessers. Da beide Signalverarbeitungen große Übereinstimmungen zu der in Fig. 2 dargestellten Signalverarbeitung aufweisen, sind nachfolgend lediglich die bestehenden Unterschiede näher erläutert. Es wird jedoch darauf hingewiesen, das die dargestellte Form des Messaufnehmers und der Signalverarbeitung lediglich ein Beispiel darstellen und die Erfindung genauso in Verbindung mit anderen Messaufnehmern und anderen Signalverarbeitungen einsetzbar ist.

Ein erfindungsgemäßer Coriolis Durchflussmesser umfasst, wie in Fig. 1 dargestellt, mindestens ein Messrohr 3, das im Messbetrieb zu Schwingungen angeregt wird und von einem Medium durchströmt wird, deren Durchfluss M zu messen ist. Die Erfindung ist aber nicht auf ein einziges Messrohr beschränkt. Sie kann völlig analog auch bei Coriolis Durchflussmessern mit zwei oder mehr Messrohren angewendet werden. Der dargestellte Messaufnehmer weist einen ersten und einem zweiten Sensor 21, 23 zur Erfassung einer vom Durchfluss M abhängigen Schwingung des Messrohrs 3 und zur Erzeugung eines ersten und eines zweiten, die Schwingung repräsentierenden Sensorsignals S1, S2 auf. Hier gilt natürlich analog, dass sehr viel mehr als nur zwei Sensoren eingesetzt werden können. Die Erfindung kann dann für jedes mögliche Paar von zwei Sensoren, die aus der Gesamtheit der vorhandenen Sensoren ausgewählt werden, angewendet werden.

Gemäß einer ersten Variante der Erfindung weist der Coriolis Durchflussmesser einen Referenzsignal-Generator auf, der dem zweiten Sensorsignal S2 ein Referenzsignal R überlagert.

Der Referenzsignal-Generator ist vorzugsweise ein Spannungs-Generator, der dem Sensorsignal S2 eine Spannung überlagert. Dies bietet bei dem beschriebenen Durchflussmesser den Vorteil, dass ein Stromfluss, der sich unter Umständen über die Spule 27 auf die Messrohrschwingung auswirken könnte, vermieden wird. Das Referenzsignal R ist vorzugsweise eine oszillierende Spannung mit einer vorgegebenen Frequenz $f_R$, die von der Frequenz $f_s$ der Sensorsignale S1, S2 unterscheidbar ist. Bei einer Frequenz $f_s$ der Sensorsignale von z.B. 800 Hz, kann die Frequenz $f_R$ des Referenzsignals R z.B. 300 Hz betragen. Als Referenzsignal-Generatoren eignet sich sowohl ein analoger als auch ein digitaler Referenzsignal-Generator 48a, 48b. Beide Varianten sind in Fig. 3 zur Veranschaulichung dargestellt. Als analoger Referenzsignal-Generator 48a eignet sich z.B. ein spannungsgesteuerter Oszillator (VCO). Diese Option ist in Fig. 3 durch eine gestrichelte Linienführung dargestellt. Alternativ kann das Referenzsignal R durch einen digitalen Referenzsignal-Generator 48b in digitaler Form, z.B. in Form eines Kosinus oder eines Sinus, generiert werden. Der digitale Referenzsignal-Generator 48b ist vorzugsweise Bestandteil einer ohnehin vorhandenen digitalen Signalverarbeitung, hier der Signalverarbeitung 45. Das digitale Referenzsignal $R_d$ wird, wie in Fig. 3 dargestellt, mittels eines Digital-Analog Wandlers D/A und gegebenenfalls eines Verstärker A in ein analoges Referenzsignal R umgewandelt und dem Sensorsignal S2 überlagert.

Bei der in Fig. 3 dargestellten Signalverarbeitung erfolgt die Überlagerung des Referenzsignals R unmittelbar über die Spule 27 des Sensors 23. Der Referenzsignal-Generator 48a, bzw. 48b ist unmittelbar mit einem ersten Anschluss 55 der Spule 27 verbunden. Ein erster Anschluss 53 der Spule 25 liegt an Masse oder an einem Bezugspotential. Ein zweiter Anschluss 57 der Spule 25 ist über den Impedanzwandler 31 und den Vorverstärker 33 mit einem Eingang des ersten Signalverarbeitungszweigs 37 verbunden. Ein zweiter Anschluss 59 der Spule 27 ist über den Impedanzwandler 31 und den Vorverstärker 35 mit einem Eingang des zweiten Signalverarbeitungszweig 37 verbunden.

Die Überlagerung kann aber auch auf andere Weise vorgenommen werden. Fig. 4 zeigt ein Ausführungsbeispiel bei dem die Überlagerung über einen dem zweiten Signalverarbeitungszweig 39 vorgeschalteten Summen- oder Differenzverstärker bewirkt wird. Der Summen- oder Differenzverstärker kann dabei ein zusätzliches Element sein, das in die Schaltung eingefügt wird. Vorzugsweise wird jedoch ein regelbarer Summen- oder Differenzverstärker 61 eingesetzt, der an die Stelle des Vorverstärkers 35 tritt. Das Referenzsignal R liegt an einem ersten Eingang 63 des dem zweiten Signalverarbeitungszweig 39 vorgeschalteten Summen- oder Differenzverstärker 61 an. Die Spulen 25, 27 liegen über deren ersten Anschluss 53, 55 an Masse oder an einem einem Bezugspotential. Der zweite Anschluss 59 der Spule 27 ist über den Impedanzwandler 31 mit einem zweiten Eingang 65 des dem zweiten Signalverarbeitungszweig 39 vorgeschalteten Summen- oder Differenzverstärkers 61 verbunden.

In den dargestellten Ausführungsbeispielen sind die Sensoren 21, 23 jeweils nur mit einer Spule 25, 27 ausgestattet. Analog können natürlich auch Sensoren eingesetzt werden, die zwei oder mehr Spulen aufweisen. Die Überlagerung des Referenzsignals R erfolgt dann entsprechend dem Aufbau der Sensoren analog.

Durch die Überlagerung des zweiten Sensorsignals S2 mit dem Referenzsignal R entsteht ein Hilfssignal H. Das Hilfssignal H und das Sensorsignal S 1 werden einer analogen Vorverarbeitung unterzogen. Dies geschieht beispielsweise identisch zu der anhand von Fig. 2 beschriebenen Vorverarbeitung der Sensorsignale S1, S2, wobei das Hilfssignal H an die Stelle des Sensorsignals S2 von Fig. 2 tritt.

An die Vorverarbeitung schließt sich eine weitere Verarbeitung des ersten Sensorsignals S 1 und des Hilfssignals H in einem ersten und einem zweiten Signalverarbeitungszweig 37, 39 an.

Zwischen dem zweiten Anschluss 57 der Spule 25 und dem Eingang des ersten Signalverarbeitungszweigs 37 ist der Impedanzwandler 31 und der Vorverstärker 33 angeordnet. Die Vorverstärkung $g_{v1}$ des ersten Sensorsignals S1 ist derart geregelt ist, dass ein Realteil des ersten Messsignals $U_\Delta$ verschwindet. Zwischen einem zweiten Anschluss 59 der Spule 27 und dem Eingang des zweiten Signalverarbeitungszweigs 39 ist ein Impedanzwandler 31 mit einer Verstärkung g, z.B. mit g=1, und der Vorverstärker 35 mit einer vorgegebenen Verstärkung $g_{v2}$ angeordnet.

Die in Fig. 3 dargestellten Signalverarbeitungszweige 37, 39 sind der Einfachheit halber identisch zu den in Fig. 2 dargestellten Signalverarbeitungszweigen 37, 39 aufgebaut. Im Unterschied zu der in Fig. 2 dargestellten Signalverarbeitung wird den Signalverarbeitungszweigen 37, 39 hier das impedanzgewandelte vorverstärkte erste Sensorsignal S1 und das impedanzgewandelte vorverstärkte Hilfssignale H zugeführt. Das impedanzgewandelte vorverstärkte Hilfssignal H tritt an die Stelle des impedanzgewandelten vorverstärkten zweiten Sensorsignals S2 von Fig. 2.

Der erste Signalverarbeitungszweig 37 leitet anhand des ersten Sensorsignals S1 und des durch die Überlagerung des zweiten Sensorsignals S2 mit dem Referenzsignal R gebildeten Hilfssignals H ein erstes Signal $S_\Delta$ ab, das einer Differenz des ersten Sensorsignal S1 und des Hilfssignals H entspricht, und bereitet dieses auf.

Entsprechend leitet der zweite Signalverarbeitungszweig 39 anhand des Hilfssignals H oder anhand des ersten Sensorsignals S1 und des Hilfssignals H ein zweites Signal $S \Sigma$ ab und bereitet dieses auf. Das zweite Signal $S_\Sigma$ entspricht dabei, analog zu den Ausführungen zu Fig. 2, der Summe des ersten Sensorsignals S1 und des Hilfssignals H oder dem, beispielsweise um einen Faktor 2 verstärkten, Hilfssignal H. Letztere Variante ist jedoch nur unter der Bedingung einsetzbar, das ein Phasenwinkel zwischen dem ersten und dem zweiten Sensorsignal S1, S2 weniger als einige zehn Millirad beträgt. Die Ableitung und die Aufbereitung erfolgt bei dem in Fig. 3 dargestellten Ausführungsbeispiel durch den Differenzverstärker 41, den Analog-Digital Wandler $A/D_\Delta$, den Addierer 47 oder einen in Fig. 3 nicht dargestellten Verstärker, und den Analog-Digital Wandler $A/D_\Sigma$. Selbstverständlich können die beiden Signalverarbeitungszweige 37, 39 weitere Elemente zur Ableitung und Aufbereitung enthalten, die hier jedoch aus Gründen der Übersichtlichkeit nicht dargestellt sind. Die aufbereiteten ersten und zweiten Signale $S_\Sigma$ und $S_\Delta$ stehen über das Interface 43 zur Verfügung.

Erfindungsgemäß sind zwei, vorzugsweise identische, Sätze von jeweils zwei Filtern $FS_\Delta$, FR1; $FS_\Sigma$, FR2, vorgesehen. Der erste Satz umfasst die Filter $FS_\Delta$, FR1 und dient dazu aus dem aufbereiteten ersten Signal $S_\Delta$ ein aufbereitetes erstes Referenzsignal R1 und ein einer Differenz der Sensorsignale S1, S2 entsprechendes erstes Messsignal $U_\Delta$ heraus zu filtern.

Der zweite Satz umfasst die Filter $FS_\Sigma$, FR2 und dient dazu aus dem aufbereiteten zweiten Signal $S_\Sigma$ ein aufbereitetes zweites Referenzsignal R2 und, ein zweites Messsignal $U_\Sigma$ heraus zu filtern. In Abhängigkeit davon, ob in dem zweiten Signalverarbeitungszweig 39 ein Addierer 47 oder ein Verstärker eingesetzt wurde, entspricht das zweites Messsignal $U_\Sigma$ entweder der Summe der Sensorsignale S1, S2 oder dem verstärkten zweiten Sensorsignal S2.

Die Filter $FS_\Delta$, FR1; $FS_\Sigma$,FR2 sind hier zum besseren Verständnis als eigenständige Bauteile dargestellt. Moderne Signalverarbeitungen 45, z.B. digitale Signalprozessoren, weisen eine hohe Funktionalität auf und sind sehr vielseitig einsetzbar. Insbesondere sind sie sehr gut geeignet die Funktion der Filter $FS_\Delta$, FR1; $FS_\Sigma$,FR2, zu übernehmen. Entsprechend können die Filter $FS_\Delta$, FR1; $FS_\Sigma$,FR2 in der digitalen Signalverarbeitung 45 integriert sein. Dies ist in Fig. 3 durch eine gestrichelt eingezeichnete Linie dargestellt.

Die in den beiden Signalverarbeitungszweigen 37, 39 enthaltenen Bauteile weisen jeweils Verstärkungen auf, die zwar vorab anhand deren Spezifikation und Einstellung oder durch eine Kalibration bestimmbar sind, die sich jedoch z.B. mit der Zeit oder aufgrund von Änderungen der Temperatur verändern können. Mit der Verstärkung der Signalzweige 37, 39 ist hier die Gesamtverstärkung gemeint, die durch das Zusammenspiel aller in dem jeweiligen Signalverarbeitungsweig 37, 39 enthaltenen Bauteile bewirkt wird. Diese entspricht dem Produkt der einzelnen Verstärkungen der einzelnen Bauteile eines Signalverarbeitungszweigs 37, 39. Wie bereits in der Beschreibungseinleitung erläutert gehen diese Verstärkungen bzw. das Verhältnis der Verstärkungen des ersten und des zweiten Signalverarbeitungszweiges 37, 39 in die Bestimmung des Durchflusses ein. Jede Veränderung wirkt sich somit nachteilig auf die Messgenauigkeit aus.

Erfindungsgemäß wird dieses Problem gelöst, indem Mittel 49 vorgesehen sind, die anhand des ersten und des zweiten aufbereiteten Referenzsignals R1, R2 ein Verhältnis der Verstärkungen V des ersten und des zweiten Signalverarbeitungszweiges 37, 39 ermitteln, und indem Mittel 51 zur Bestimmung des Durchflusses M vorgesehen sind, die den Durchfluss M anhand des ersten und des zweiten Messsignals $U_\Delta$, $U_\Sigma$ bestimmen und dabei das Verhältnis der Verstärkungen V berücksichtigen. Da es sich in beiden Fällen um digitale Signalverarbeitung handelt, sind sowohl die Mittel 49, die das Verhältnis der Verstärkungen V des ersten und des zweiten Signalverarbeitungszweiges 37, 39 ermitteln, als auch die Mittel 51 zur Bestimmung des Durchflusses M vorzugsweise in der digitalen Signalverarbeitung 45 integriert.

Das erste Signal $S_\Delta$ entspricht bei dem in Fig. 3 dargestellten Ausführungsbeispiel der verstärkten digitalisierten Differenz des impedanzgewandelten vorverstärkten ersten Sensorsignals S1 und des impedanzgewandelten vorverstärkten Hilfssignals H mit H = S2 +/- R, d.h.

$$S_\Delta = [\, S1 \; g \; g_{v1} - (S2 +/- R) \; g \; g_{v2}] \; g_\Delta \; g_{A/D\Delta}$$

worin S 1 und S2 das erste und das zweite Sensorsignal

R das Referenzsignal

g die Verstärkung der Impedanzwandler 31

$g_{v1}$ die geregelte Verstärkung des ersten Vorverstärkers 33

$g_{v2}$ die feste Verstärkung des zweiten Vorverstärkers 35

$g_\Delta$ die Verstärkung des Differenzverstärkers 41; und

$g_{A/D\Delta}$ die Verstärkung des Analog-Digital Wandlers $A/D_\Delta$

bedeuten. Dabei ist das Hilfssignal H eine Überlagerung des zweiten Sensorsignals S2 und des Referenzsignals R, die z.B. durch Summierung, d.h. H = S2 + R oder durch Differenzbildung, d.h. H = S2 - R, realisiert wird. Beide Formen der Überlagerung sind gleichwertig.

Das zweite Signal $S_\Sigma$ entspricht bei dem in Fig. 3 dargestellten Ausführungsbeispiel der digitalisierten Summe des impedanzgewandelten vorverstärkten ersten Sensorsignals S1 und des impedanzgewandelten vorverstärkten Hilfssignals H mit H = S2 +/- R, d.h.

$$S_\Sigma = [\, S1 \; g \; g_{v1} + (S2 +/- R) \; g \; g_{v2}] \; g_\Sigma \; g_{A/D\Sigma}$$

worin S1 und S2 das erste und das zweite Sensorsignal

R das Referenzsignal

g die Verstärkung der Impedanzwandler 31

$g_{v1}$ die geregelte Verstärkung des ersten Vorverstärkers 33

$g_{v2}$ die feste Verstärkung des zweiten Vorverstärkers 35

$g_\Sigma$ die Verstärkung des Addierers 47 ; und

$g_{A/D\Sigma}$ die Verstärkung des Analog-Digital Wandlers $A/D_\Sigma$

bedeuten.

Bei der oben beschriebenen Alternative, bei der im zweiten Signalzweig 39 keine Addition des ersten Sensorsignals S 1 erfolgt, würde der entsprechende Term S1 g $g_{v1}$ in der Klammer in der obigen Formel für das zweite Signal $S_\Sigma$

entfallen.

Für die in Fig. 4 dargestellte Variante gilt entsprechend:

$$S_\Delta = [\, S1 \; g \; g_{v1} - (S2 \; g +/- R) \; g_{v2}] \; g_\Delta \; g_{A/D\Delta}$$

$$S_\Sigma = [\, S1 \; g \; g_{v1} + (S2 \; g +/- R) \; g_{v2}] \; g_\Sigma \; g_{A/D\Sigma}$$

da das Referenzsignal R bei dieser Variante den dem zweiten Signalverarbeitungszweig 39 vorgeschalteten Impedanzwandler 31 nicht durchläuft. Auch hier würde bei der oben beschriebenen Alternative, bei der im zweiten Signalzweig 39 keine Addition des ersten Sensorsignals S 1 erfolgt, der entsprechende Term S1 g $g_{v1}$ in der Klammer in der obigen Formel für das zweite Signal $S_\Sigma$ entfallen.

Die Filter FR1 und FR2 filtern aus dem ersten und dem zweiten Signal $S_\Delta$ und $S_\Sigma$ ein erstes und ein zweites aufbereitetes Referenzsignal R1, R2 heraus, d.h. es werden diejenigen Komponenten heraus gefiltert, die die Referenzfrequenz $f_R$ aufweisen. Damit ergibt sich für das erste aufbereitete Referenzsignal R1 der in Fig. 3 dargestellten Variante:

$$R1 = -/+ R \; g \; g_{v2} \; g_\Delta \; g_{A/D\Delta}$$

Entsprechend gilt für die in Fig. 4 dargestellte Variante:

$$R1 = -/+ \ R \ g_{v2} \ g_{\Delta} \ g_{A/D\Delta}$$

Für das aufbereitete zweite Referenzsignal R2 der in Fig. 3 dargestellten Variante gilt:
$$R2 = +/- \ R \ g \ g_{v2} \ g_{\Sigma} \ g_{A/D\Sigma}$$

Entsprechend gilt für die Variante von Fig. 4:
$$R2 = +/- \ R \ g_{v2} \ g_{\Sigma} \ g_{A/D\Sigma}$$

Die aufbereiteten Referenzsignale R1, R2 weisen auch dann diese Form auf, wenn im zweiten Signalzweig 39 keine Addition des ersten Sensorsignals S1 vorgenommen wurde.
Das Verhältnis V der Verstärkungen des ersten und des zweiten Signalverarbeitungszweiges 37, 39 ergibt sich damit unmittelbar aus dem Betrag der Quotienten des ersten und des zweiten aufbereiteten Referenzsignals R1, R2. Damit gilt:
$$V = | \ R1/R2| = g_{\Delta} \ g_{A/D\Delta}$$

$$g_{\Sigma} \ g_{A/D\Sigma}$$

Dieses Verhältnis V oder, was äquivalent dazu ist, dessen Kehrwert 1/V, wird in der digitalen Signalverarbeitung 45 mit den Mitteln 49 bestimmt.
Die Filter $FS_{\Delta}$ und $FS_{\Sigma}$ filtern aus dem ersten und dem zweiten Signal $S_{\Delta}$ und $S_{\Sigma}$ ein erstes und ein zweites Messsignal $U_{\Delta}$ und $U_{\Sigma}$ heraus, d.h. es werden diejenigen Komponenten heraus gefiltert, die die Frequenz der Sensoren $f_s$ aufweisen. Damit ergibt sich für das erste Messsignal $U_{\Delta}$:
$$U_{\Delta} = [ \ S1 \ g \ g_{v1} - S2 \ g \ g_{v2}] \ g_{\Delta} \ g_{A/D\Delta}$$

Und für das zweite Messsignal $U_{\Sigma}$:
$$U_{\Sigma} = [ \ S1 \ g \ g_{v1} + S2 \ g \ g_{v2}] \ g_{\Sigma} \ g_{A/D\Sigma}$$

Bei der oben beschriebenen Alternative, bei der im zweiten Signalzweig 39 keine Addition des ersten Sensorsignals S 1 erfolgt, würde natürlich auch hier der entsprechende Term $S1 \ g \ g_{v1}$ in der Klammer in der obigen Formel für das zweite Messsignal $U_{\Sigma}$ entfallen.
Durch die Mittel 51 wird nun der Durchfluss M bestimmt, indem ein Imaginärteil $Im(U_{\Delta})$ des ersten Messsignals $U_{\Delta}$ und ein Betrag $|U_{\Sigma}|$ des zweiten Messsignals $U_{\Sigma}$ bestimmt wird. Die Bestimmung des Durchflusses M erfolgt dann analog zu der in der Beschreibungseinleitung beschriebenen Bestimmung, wobei an die Stelle der zuvor implizit abgeglichenen und abgespeicherten Konstanten der Verstärkungen der Signalverarbeitungszweige 37, 39 das tatsächliche gemessene Verhältnis V der Verstärkungen tritt. Der Durchfluss M bestimmt sich dann anhand des ersten und des

zweiten Messsignal $U_\Delta$, $U_\Sigma$ und des tatsächlichen gemessenen Verhältnisses V der Verstärkungen zu:
$$M = k \ \frac{Im \ (U_\Delta) \ 1}{|U_\Sigma| \ f_s \ V}$$

wobei k eine Proportionalitätskonstante

$f_s$ die Frequenz der Sensorsignale S1, S2 bedeuten.

Bei diesem Verfahren zur Bestimmung des Durchflusses M mit dem erfindungsgemäßen Coriolis Durchflussmesser gemäß ist der Durchfluss M proportional zum Verhältnis des Imaginärteiles $Im(U_\Delta)$ des ersten Messsignals $U_\Delta$ und dem Betrag des zweiten Messsignals $|U_\Sigma|$ und umgekehrt proportional zu dem Verhältnis der Verstärkungen V.

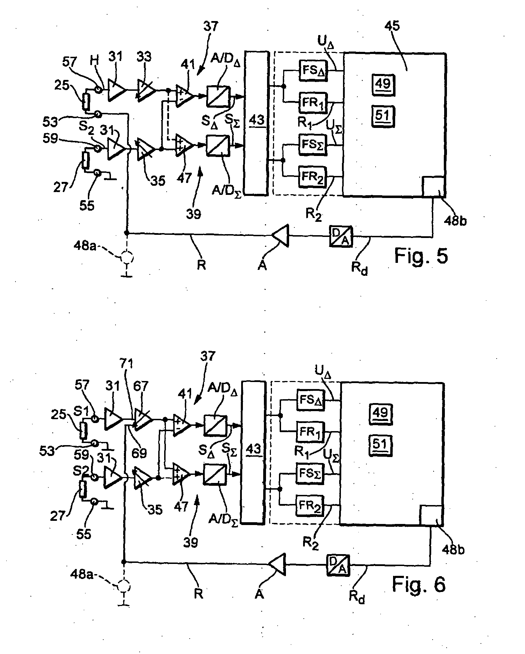

In den Figuren 5 und 6 sind zwei weitere Ausführungsbeispiele von Signalverarbeitungen von erfindungsgemäßen Coriolis Durchflussmessern dargestellt, die beispielsweise in Verbindung mit dem in Fig. 1 dargestellten Messaufnehmer einsetzbar sind. Sie unterscheiden sich von den in den Figuren 3 und 4 dargestellten Ausführungsbeispielen lediglich darin, dass das Referenzsignal R nicht dem zweiten Sensorsignal S2, sondern dem ersten Sensorsignal S1 überlagert wird. Das Referenzsignal R liegt bei dem in Fig. 5 dargestellten Ausführungsbeispiel am ersten Anschluss 53 der Spule 25 des ersten Sensors 21 an.

Bei der in Fig. 6 dargestellten Signalverarbeitung wird die Überlagerung über einen dem ersten Signalverarbeitungszweig 37 vorgeschalteten Summen- oder Differenzverstärker bewirkt wird. Der Summen- oder Differenzverstärker kann dabei ein zusätzliches Element sein, das in die Schaltung eingefügt wird. Vorzugsweise wird jedoch ein regelbarer Summen- oder Differenzverstärker 67 eingesetzt, der an die Stelle des Vorverstärkers 33 tritt. Das Referenzsignal R liegt an einem ersten Eingang 69 des dem ersten Signalverarbeitungszweig 37 vorgeschalteten Differenzver-stärkers 67 an. Die Spulen 25, 27 liegen über deren ersten Anschluss 53, 55 an Masse oder an einem Bezugspotential. Der zweite Anschluss 57 der Spule 25 ist über den Impedanzwandler 31 mit einem zweiten Eingang 71 des dem ersten Signalverarbeitungszweig 37 vorgeschalteten Summen- oder Differenzverstärkers 67 verbunden.

Bei den in den Figuren 5 und 6 dargestellten Signalverarbeitungen wird im ersten Signalverarbeitungszweig 37 anhand des durch die Überlagerung des ersten Sensorsignals S 1 mit dem Referenzsignal R gebildeten Hilfssignals H und des zweiten Sensorsignals S2 ein erstes Signal $S_\Delta$ ableitet und aufbereitet, das der Differenz des Hilfssignals H und des zweiten Sensorsignals S2 entspricht. Im zweiten Signalverarbeitungszweig 39 wird anhand des Hilfssignals H und des zweiten Sensorsignals S2 ein zweites Signal $S_\Sigma$ abgeleitet und aufbereitet, das der Summe des Hilfssignals H und des zweiten Sensorsignals S2 entspricht. Alternativ kann hier, analog zu den Ausführungen zu Fig. 3 und Fig4, auf die Summenbildung verzichtet werden, indem im zweiten Signalverarbeitungszweig 39 ein zweites Signal $S_\Sigma$ abgeleitet und aufbereitet wird, das dem Hilfssignals H entspricht. An die Stelle des Addierers 47 tritt dann ein Verstärker, der das Hilfssignal H mit der Verstärkung $g_{v2}$ verstärkt. Die in den Figuren 5 und 6 gestrichelt eingezeichnete Verbindung zwischen dem Vorverstärker 35 und dem zweiten Signalverarbeitungszweig 39 entfällt dann.

Die oben beschriebene Alternative, bei der im zweiten Signalverarbeitungszweig 39 anstelle einer Summenbildung nur das zweite Sensorsignal S2 verstärkt und aufbereitet wird, ist hier nicht zulässig, da sich dann das Verhältnis der Verstärkungen V dabei nicht auf die oben beschriebene Weise ermitteln lässt.

Bei den in den Figuren 5 und 6 dargestellten Ausführungsbeispielen sind genau wie bei den zuvor beschriebenen Ausführungsbeispielen zwei vorzugsweise identische Sätze von jeweils zwei Filtern $FS_\Delta$, FR1; $FS_\Sigma$, FR2, vorgesehen, von denen ein erster dazu dient, aus dem aufbereiteten ersten Signal $S_\Delta$ ein aufbereitetes erstes Referenzsignal R1 und ein der Differenz der Sensorsignale S1, S2 entsprechendes erstes Messsignal $U_\Delta$ heraus zu filtern, und von denen ein zweiter dazu dient, aus dem aufbereiteten zweiten Signal $S_\Sigma$ ein aufbereitetes zweites Referenzsignal R2 und ein zweites Messsignal $U_\Sigma$ heraus zu filtern. Auch hier sind wieder Mittel 49, die anhand des ersten und des zweiten aufbereiteten Referenzsignals R1, R2 ein Verhältnis der Verstärkungen V des ersten und des zweiten Signalverarbeitungszweiges 37, 39 ermitteln, und Mittel 51 zur Bestimmung des Durchflusses M anhand des ersten und des zweiten Messsignals $U_\Delta$, $U_\Sigma$ vorgesehen, die das Verhältnis der Verstärkungen V berücksichtigen.

Das erste Signal $S_\Delta$ entspricht bei der in Fig. 5 dargestellten Variante der verstärkten digitalisierten Differenz des impedanzgewandelten vorverstärkten Hilfssignals H mit H = S1 +/- R und des impedanzgewandelten vorverstärkten zweiten Sensorsignals S2, d.h.

$$S_\Delta = [\,(S1 +/- R)\, g\, g_{v1} - S2\, g\, g_{v2}]\, g_\Delta\, g_{A/D\Delta}$$

Für die in Fig. 6 dargestellte Variante gilt entsprechend:
$$S_\Delta = [\,(S1\, g +/- R)\, g_{v1} - S2\, g\, g_{v2}]\, g_\Delta\, g_{A/D\Delta}$$

Das zweite Signal $S_\Sigma$ entspricht bei der in Fig. 5 dargestellten Variante der digitalisierten Summe des impedanzgewandelten vorverstärkten Hilfssignals H mit H = S1 +/- R und des impedanzgewandelten vorverstärkten zweiten Sensorsignals S2, d.h.
$$S_\Sigma = [\,(S1 +/- R)\, g\, g_{v1} + S2\, g\, g_{v2}]\, g_\Sigma\, g_{A/D\Sigma}$$

Für die in Fig. 6 dargestellte Variante gilt entsprechend:
$$S_\Sigma = [\,(S1\, g +/- R)\, g_{v1} + S2\, g\, g_{v2}]\, g_\Sigma\, g_{A/D\Sigma}$$

Bei der oben beschriebenen Alternative, bei der im zweiten Signalzweig 39 keine Addition des zweiten Sensorsignals S2 erfolgt, würde der entsprechende Term S2 g $g_{v2}$ in der Klammer in den obigen Formeln für das zweite Signal $S_\Sigma$
entfallen.
Die Filter FR1 und FR2 filtern aus dem ersten und dem zweiten Signal $S_\Delta$ und $S_\Sigma$ ein erstes und ein zweites aufbereitetes Referenzsignal R1, R2 heraus. Damit ergibt sich für das erste aufbereitete Referenzsignal R1 der in Fig. 5 dargestellten Variante:
$$R1 = +/- R\, g\, g_{v1}\, g_\Delta\, g_{A/D\Delta}$$

und für das aufbereitete zweite Referenzsignal R2 der in Fig. 5 dargestellten Variante:
$$R2 = +/- R\, g\, g_{v1}\, g_\Sigma\, g_{A/D\Sigma}$$

Für die in Fig. 6 dargestellte Variante gilt entsprechend:
$$R1 = +/- R\, g_{v1}\, g_\Delta\, g_{A/D\Delta}$$

und
$$R2 = +/- R\, g_{v1}\, g_\Sigma\, g_{A/D\Sigma}$$

Das Verhältnis V der Verstärkungen des ersten und des zweiten Signalverarbeitungszweiges 37, 39 ergibt sich damit unmittelbar aus dem Quotienten des ersten und des zweiten aufbereiteten Referenzsignals R1, R2. Damit gilt:
$$V = R1/R2 = \underline{g_\Delta\, g_{A/D\Delta}}$$

$$g_\Sigma\, g_{A/D\Sigma}$$

Alles weitere, insb. die Bestimmung des Durchflusses M erfolgt auf die gleiche Weise, wie sie bereits in Verbindung mit den Figuren 3 und 4 erläutert wurde.

Neben dem eigentlichen Coriolis Durchflussmessgerät beinhaltet die Erfindung zusätzlich ein Verfahren zur Bestimmung des Verhältnisses von Verstärkungen V von zwei getrennten Signalverarbeitungszweigen 37, 39 eines Coriolis Durchflussmessers, der einen ersten und einem zweiten Sensor 21, 23 zur Erfassung einer vom Durchfluss abhängigen Schwingung eines Messrohrs 3 und zur Erzeugung eines ersten und eines zweiten Sensorsignals S1, S2 aufweist. Gemäß diesem Verfahren wird, wie oben bereits anhand des erfindungsgemäßen Coriolis Durchflussmessers beschrieben, entweder dem zweiten Sensorsignal S2 (siehe Figuren 3 und 4) oder dem ersten Sensorsignal S1 (siehe Figuren 5 und 6) das Referenzsignal R überlagert.

Im erstgenannten Fall wird im ersten Signalverarbeitungszweig 37 ein erstes Signal $S_\Delta$ abgeleitet und aufbereitet, dass einer Differenz des ersten Sensorsignals S1 und des Hilfssignals H entspricht. Im zweiten Signalverarbeitungszweig 39 wird ein zweites Signal $S_\Sigma$ abgeleitet und aufbereitet, dass einer Summe des ersten Sensorsignals S1 und des Hilfssignals H oder dem Hilfssignal H entspricht.

Im zweiten Fall wird im ersten Signalverarbeitungszweig 37 ein erstes Signal $S_\Delta$ abgeleitet und aufbereitet, dass einer Differenz des Hilfssignals H und des zweiten Sensorsignals S2 entspricht. Im zweiten Signalverarbeitungszweig 39 wird ein zweites Signal $S_\Sigma$ abgeleitet und aufbereitet, dass einer Summe des Hilfssignals H und des zweiten Sensorsignals S2 oder dem Hilfssignal H entspricht.

Aus dem ersten und dem zweiten Signal $S_\Delta$, $S_\Sigma$ wird ein erstes und ein zweites aufbereitetes Referenzsignal R1, R2 heraus gefiltert. Nachfolgend wird anhand der aufbereiteten Referenzsignale R1, R2, wie bereits oben beschrieben, das Verhältnis der Verstärkungen V der Signalverarbeitungszweige 37, 39 bestimmt.

Die Verstärkungen der einzelnen Komponenten der Signalverarbeitungszweige 37, 39 ändern sich in der Regel sehr langsam, da Alterungserscheinungen und Temperaturänderungen im Verhältnis zum Durchfluss bzw. zu dessen Änderungen nur sehr langsam erfolgen.

Entsprechend lässt sich die Genauigkeit, mit der das Verhältnis der Verstärkungen V bestimmt wird, verbessern, indem das Verhältnis der Verstärkungen V mehrfach bestimmt wird, und dessen Mittelwert ermittelt und anstelle der Einzelmessungen herangezogen wird. Entsprechend wird dann der Durchfluss M anhand des Mittelwertes der Verhältnisse V bestimmt.

Störungen, die Frequenzen im Bereich der Frequenz $f_R$ des Referenzsignals R, aufweisen, können die Genauigkeit mit der das Verhältnis V der Verstärkungen gemessen werden kann beeinträchtigen. Derartige Nachteile können vermieden werden, indem das Verhältnis der Verstärkungen V mehrfach bestimmt wird, und eine Verteilung der Verhältnisse V bestimmt wird. Die einzelnen Verhältnisse V bzw. deren Mittelwert, werden immer dann als zuverlässig angesehen, wenn die Verhältnisse V normalverteilt sind und eine Standardabweichung der Verhältnisse V unterhalb eines vorgegebenen Wertes liegt. Entsprechend wird der Durchfluss M vorzugsweise nur dann anhand des gemessenen Verhältnisses V oder eines Mittelwertes der Verhältnisse bestimmt, wenn die Verhältnisse normalverteilt sind und eine Standardabweichung der Verhältnisse unterhalb des vorgegebenen Wertes liegt.

Sofern sich das gemessene Verhältnis, bzw. dessen Mittelwert, aufgrund der obigen Bedingung, z.B. in Folge einer kurzzeitigen Störung, als unzuverlässig erweist, so wird vorzugsweise für diesen Zeitraum auf zuvor implizit abgeglichene und abgespeicherte Konstanten der Verstärkungen der Signalverarbeitungszweige 37, 39, wie sie in der Einleitung erwähnt sind, zurück gegriffen, oder das zuletzt zuverlässig bestimmte Verhältnis V eingesetzt. Das tatsächliche gemessene Verhältnis V der Verstärkungen wird weiter verfolgt, und erst dann wieder eingesetzt, wenn es zuverlässig erscheint.

In den obigen Ausführungen wird das gemessene Verhältnis der Verstärkungen V oder dessen Mittelwert unmittelbar zur Bestimmung des Durchflussses M herangezogen. Bei dieser Vorgehensweise wird das aktuelle gemessene Verhältnis oder dessen Mittelwert vorzugsweise regelmäßig persistent abgespeichert. Dies bietet den Vorteil, dass bei einem Neustart des Durchflussmessers M mit dem zuletzt abgelegten Verhältnis V gestartet werden kann und nicht auf ein Einschwingen des Gesamtsystems gewartet werden muss.

Alternativ kann natürlich auch ein Referenzwert $V_R$ für das Verhältnis der Verstärkungen im Durchflussmessgerät abgespeichert werden, der mit dem gemessenen Verhältnis V der Verstärkungen verglichen wird. Besteht eine Abweichung zwischen dem gemessenen Verhältnis V und dem Referenzwert $V_R$, so wird eine Kompensation vorgenommen und der abgelegte Referenzwert $V_R$ gegebenenfalls angepasst.

**Tabelle 1**

| | |
|---|---|
| 1 | Messaufnehmer |
| 3 | Messrohr |
| 5 | Endplatte |
| 7 | Flansch |
| 9 | Endplatte |
| 11 | Flansch |
| 13 | Trägerrohr |
| 15 | Schwingungserreger |
| 17 | Permanentmagnet |
| 19 | Spule |
| 21 | Sensor |
| 23 | Sensor |
| 25 | Spule |
| 27 | Spule |
| 29 | Permanentmagnet |
| 31 | Impedanzwandler |
| 33 | Vorverstärker |
| 35 | Vorverstärker |
| 37 | erster Signalverarbeitungszweig |
| 39 | zweiter Signalverarbeitungszweig |
| 41 | Differenzverstärker |
| 43 | Interface |
| 45 | digitale Signalverarbeitung |
| 47 | Addierer |
| 48a | analoger Referenzsignal Generator |
| 48b | digitaler Referenzsignal Generator |
| 49 | Mittel zur Bestimmung des Verhältnisses |
| 51 | Mittel zur Bestimmung des Durchflusses |
| 53 | erster Anschluss |
| 55 | erster Anschluss |
| 57 | zweiter Anschluss |
| 59 | zweiter Anschluss |
| 61 | Summen- oder Differenzverstärker |
| 63 | erster Eingang |
| 65 | zweiter Eingang |
| 67 | Summen- oder Differenzverstärker |
| 69 | ersten Eingang |
| 71 | zweiten Eingang |

**Patentansprüche**

1. Coriolis-Durchflussmesser mit - mindestens einem Messrohr (3), das im Messbetrieb zu Schwingungen angeregt wird und von einem Medium durchströmt wird, dessen Durchfluss zu messen ist, - einem ersten und einem zweiten Sensor (21, 23) zur Erfassung einer vom Durchfluss abhängigen Schwingung des Messrohrs (3) und zur Erzeugung eines ersten und eines zweiten Sensorsignals (S1, S2), - einem Referenzsignal-Generator (48a, 48b), der dem zweiten Sensorsignal (S2) ein Referenzsignal (R) überlagert, -einem ersten Signalverarbeitungszweig (37), -- der anhand des ersten Sensorsignals (S1) und eines durch die Überlagerung des zweiten Sensorsignals (S2) mit dem Referenzsignal (R) gebildeten Hilfssignals (H) ein erstes Signal ($S_\Delta$) ableitet und aufbereitet, das einer Differenz des ersten Sensorsignals (S1) und des Hilfssignals (H) entspricht, -einem zweiten Signalverarbeitungszweig (39),

der anhand des Hilfssignals (H) oder anhand des ersten Sensorsignals (S1) und des Hilfssignals (H) ein zweites Signal ($S_\Sigma$) ableitet und aufbereitet, - zwei Sätze von jeweils zwei Filtern ($FS_\Delta$, FR1; $FS_\Sigma$,FR2,), von denen ein erster dazu dient, aus dem aufbereiteten ersten Signal ($S_\Delta$) ein aufbereitetes erstes Referenzsignal (R1) und ein einer Differenz der Sensorsignale (S1, S2) entsprechendes erstes Messsignal ($U_\Delta$) heraus zu filtern, und von denen ein zweiter dazu dient, aus dem aufbereiteten zweiten Signal ($S_\Sigma$) ein aufbereitetes zweites Referenzsignal (R2) und ein zweites Messsignal ($U_\Sigma$) heraus zu filtern, -Mittel (49), die anhand des ersten und des zweiten aufbereiteten Referenzsignals (R1, R2) ein Verhältnis der Verstärkungen (V) des ersten und des zweiten Signalverarbeitungszweiges (37, 39) ermitteln, und - Mittel (51) zur Bestimmung des Durchflusses (M) anhand des ersten und des zweiten Messsignals ($U_\Delta$, $U_\Sigma$), die das Verhältnis der Verstärkungen (V) berücksichtigen.

2. Coriolis-Durchflussmesser nach Anspruch 1, bei dem - das zweite Signal ($S_\Sigma$) gleich einer Summe des ersten Sensorsignals (S1) und des Hilfssignals (H) ist, oder - bei dem ein Phasenwinkel zwischen dem ersten und dem zweiten Sensorsignal (S1, S2) weniger als einige zehn Millirad beträgt und das zweite Signal ($S_\Sigma$) gleich dem Hilfssignal (H) ist.

3. Coriolis-Durchflussmesser nach Anspruch 1, bei dem -der erste Signalverarbeitungszweig (37) einen Differenzverstärker (41) und einen Analog-Digitalwandler ($A/D_\Delta$) aufweist, und -der zweite Signalverarbeitungszweig (39) einen Addierer (47) oder einen Verstärker und einen Analog-Digitalwandler ($A/D_\Sigma$) aufweist.

4. Coriolis-Durchflussmesser nach Anspruch 1, bei dem -die Sensoren (21, 23) jeweils eine Spule (25, 27) aufweisen, -der Referenzsignal-Generator (48a, 48b) mit einem ersten Anschluss (55) der Spule (27) des zweiten Sensors (23) verbunden ist, und -ein zweiter Anschluss (59) dieser Spule (27) mit einem Eingang des zweiten Signalverarbeitungszweig (39) verbunden ist.

5. Coriolis-Durchflussmesser nach Anspruch 1, bei dem -zwischen dem zweiten Anschluss (57) der Spule (25) des ersten Sensors (21) und dem Eingang des ersten Signalverarbeitungszweigs (37) ein Impedanzwandler (31) und ein Vorverstärker (33) angeordnet sind und eine Vorverstärkung des ersten Sensorsignals (S1) derart geregelt ist, dass ein Realteil des ersten Messsignals ($Re(U_\Delta)$) verschwindet, und -zwischen dem zweiten Anschluss (59) der Spule (27) des zweiten Sensors (23) und dem Eingang des zweiten Signalverarbeitungszweigs (39) ein Impedanzwandler (31) und ein Vorverstärker (35) mit einer vorgegebenen Verstärkung angeordnet ist.

6. Coriolis-Durchflussmesser nach Anspruch 1, bei dem -dem zweiten Signalverarbeitungszweig (39) ein Summen- oder Differenzverstärker (61) vorgeschaltet ist, -an dessen Eingängen (63, 65) das zweite Sensorsignal (S2) und das Referenzsignal (R) anliegen, und an dessen Ausgang das Hilfssignal (H) zur Verfügung steht.

7. Coriolis-Durchflussmesser mit -mindestens einem Messrohr (3), das im Messbetrieb zu Schwingungen angeregt wird und von einem Medium durchströmt wird, dessen Durchfluss zu messen ist, -einem ersten und einem zweiten Sensor (21, 23) zur Erfassung einer vom Durchfluss abhängigen Schwingung des Messrohrs (3) und zur Erzeugung eines ersten und eines zweiten Sensorsignals (S1, S2), -einem Referenzsignal-Generator (48a, 48b), der dem ersten Sensorsignal (S1) ein Referenzsignal (R) überlagert, -einem ersten Signalverarbeitungszweig (37), --der anhand eines durch die Überlagerung des ersten Sensorsignals (S1) mit dem Referenzsignal (R) gebildeten Hilfssignals (H) und des zweiten Sensorsignals (S2) ein erstes Signal ($S_\Delta$) ableitet und aufbereitet, das einer Differenz des Hilfssignals (H) und des zweiten Sensorsignals (S2) entspricht, -einem zweiten Signalverarbeitungszweig (39), --der anhand des Hilfssignals (H) oder anhand des Hilfssignal (H) und des zweiten Sensorsignals (S2) ein zweites Signal ($S_\Sigma$) ableitet und aufbereitet, -zwei Sätze von jeweils zwei Filtern ($FS_\Delta$, FR1; $FS_\Sigma$, FR2), von denen ein erster dazu dient, aus dem aufbereiteten ersten Signal ($S_\Delta$) ein aufbereitetes erstes Referenzsignal (R1) und ein einer Differenz der Sensorsignale (S1, S2) entsprechendes erstes Messsignal ($U_\Delta$) heraus zu filtern, und von denen ein zweiter dazu dient, aus dem aufbereiteten zweiten Signal ($S_\Sigma$) ein aufbereitetes zweites Referenzsignal (R2) und ein zweites Messsignal ($U_\Sigma$) heraus zu filtern,-Mittel (49), die anhand des ersten und des zweiten aufbereiteten Referenzsignals (R1, R2) ein Verhältnis der Verstärkungen (V) des ersten und des zweiten Signalverarbeitungszweiges (37, 39) ermitteln, und -Mittel (51) zur Bestimmung des Durchflusses (M) anhand des ersten und des zweiten Messsignals ($U_\Delta$,$U_\Sigma$), die das Verhältnis der Verstärkungen (V) berücksichtigen.

8. Verfahren zur Bestimmung eines Verhältnisses von Verstärkungen (V) von zwei getrennten Signalverarbeitungszweigen (37, 39) eines Coriolis Durchflussmessers, -der einen ersten und einem zweiten Sensor (21, 23) zur Erfassung einer vom Durchfluss abhängigen Schwingung eines Messrohrs (3) und zur Erzeugung eines ersten und eines zweiten Sensorsignals (S1, S2) aufweist, bei dem entweder - dem zweiten Sensorsignal (S2) ein Referenzsignal (R) überlagert wird, -in dem ersten Signalverarbeitungszweig (37) ein erstes Signal ($S_\Delta$) abgeleitet und auf-

bereitet wird, dass einer Differenz des ersten Sensorsignals (S1) und eines durch die Überlagerung des zweiten Sensorsignals (S2) mit dem Referenzsignal (R) gebildeten Hilfssignals (H) entspricht, -in dem zweiten Signalverarbeitungszweig (39) ein zweites Signal ($S_\Sigma$) abgeleitet und aufbereitet wird, dass einer Summe des ersten Sensorsignals (S1) und des Hilfssignals (H) oder dem Hilfssignal (H) entspricht, oder -dem ersten Sensorsignal (S1) ein Referenzsignal (R) überlagert wird, -in dem ersten Signalverarbeitungszweig (37) ein erstes Signal ($S_\Delta$) abgeleitet und aufbereitet wird, dass einer Differenz eines durch die Überlagerung des ersten Sensorsignals (S1) mit dem Referenzsignal (R) gebildeten Hilfssignals (H) und des zweiten Sensorsignals (S2) entspricht, - in dem zweiten Signalverarbeitungszweig (39) ein zweites Signal ($S_\Sigma$) abgeleitet und aufbereitet wird, dass einer Summe des Hilfssignals (H) und des zweiten Sensorsignals (S2) oder dem Hilfssignal (H) entspricht, und bei dem -aus dem ersten und dem zweiten Signal ($S_\Delta$, $S_\Sigma$) ein erstes und ein zweites aufbereitetes Referenzsignal (R1, R2) heraus gefiltert wird, und -anhand der aufbereiteten Referenzsignale (R1, R2) ein Verhältnis der Verstärkungen (V) der Signalverarbeitungszweige (37, 39) bestimmt wird.

9. Verfahren zur Bestimmung eines Durchflusses (M) mit einem Corioilis Durchflussmesser gemäß einem der Ansprüche 1 bis 8, bei dem der Durchfluss (M) proportional zu einem Verhältnis eines Imaginärteiles ($Im(U_\Delta)$) des ersten Messsignals ($U_\Delta$) und einem Betrag des zweiten Messsignals ($U_\Sigma$) und umgekehrt proportional zu dem Verhältnis der Verstärkungen (V) ist.

10. Verfahren nach Anspruch 9, bei dem -das Verhältnis der Verstärkungen (V) mehrfach bestimmt wird, und -der Durchfluss (M) anhand eines Mittelwertes der Verhältnisse (V) bestimmt wird.

11. Verfahren nach Anspruch 9, bei dem -das Verhältnis der Verstärkungen (V) mehrfach bestimmt wird, -eine Verteilung der Verhältnisse (V) bestimmt wird, und -der Durchfluss (M) nur dann anhand eines Mittelwertes der Verhältnisse (V) bestimmt wird, wenn die Verhältnisse (V) normalverteilt sind und eine Standardabweichung der Verhältnisse (V) unterhalb eines vorgegebenen Wertes liegt.

12. Verfahren nach Anspruch 9, bei dem -im Durchflussmessgerät ein Referenzwert ($V_R$) für das Verhältnis der Verstärkungen (V) abgespeichert ist, - das gemessene Verhältnis der Verstärkungen (V) mit dem Referenzwert ($V_R$) verglichen wird, und -bei Bestehen einer Abweichung eine Kompensation vorgenommen wird.

**Claims**

1. Coriolis flowmeter with

   - at least one measuring tube (3), which is caused to oscillate during operation and through which a medium flows. The flow rate of this medium is to be measured.
   - a first and a second sensor (21, 23) to determine an oscillation of the measuring tube (3), said oscillation being dependent on the flow, and to generate a first and a second sensor signal (S1, S2)
   - a reference signal generator (48a, 48b) that superimposes a reference signal (R) on the second sensor signal (S2)
   - a first signal processing branch (37) which uses the first sensor signal (S1) and an auxiliary signal (H), which is formed by superimposing the reference signal (R) on the second sensor signal (S2), to derive and condition a first signal (S) that corresponds to a difference between the first sensor signal (S1) and the auxiliary signal (H)
   - a second signal processing branch (39) which uses the auxiliary signal (H) or the first sensor signal (S1) and the auxiliary signal (H) to derive and condition a second signal ($S_\Sigma$)
   - two sets of two filters ($FS_\Delta$, FR1, $FS_\Sigma$, FR2) the first of which is used to filter out a conditioned first reference signal (R1) and a first measuring signal ($U_\Delta$), which corresponds to a difference in the sensor signals (S1, S2), from the conditioned first signal ($S_\Delta$). The second of these filters is used to filter out a conditioned second reference signal (R2) and a second measuring signal ($U_\Sigma$) from the conditioned second signal ($S_\Sigma$)
   - units (49) that use the first and second conditioned reference signal (R1, R2) to determine a ratio of the gains (V) of the first and second signal processing branch (37, 39)
   - units (51) for determining the flow (M) using the first and second measuring signal ($U_\Delta$, $U_\Sigma$) that take the ratio of the gains (V) into account.

2. Coriolis flowmeter as per Claim 1, where the second signal ($S_\Sigma$) is equal to the sum of the first sensor signal (S1) and the auxiliary signal (H), or where a phase angle between the first and second sensor signal (S1, S2) is less than some tens of milli-radians and the second signal ($S_\Sigma$) is equal to the auxiliary signal (H).

3. Coriolis flowmeter as per Claim 1, where the first signal processing branch (37) exhibits a differential amplifier (41) and an analog/digital converter (A/D$_\Delta$), and where the second signal processing branch (39) exhibits an adder (47) or an amplifier and an analog/digital converter (A/D$_\Sigma$).

4. Coriolis flowmeter as per Claim 1, where the sensors (21, 23) each exhibits a coil (25, 27), and where the reference signal generator (48a, 48b) is connected to a first connection (55) of the coil (27) of the second sensor (23), and where a second connection (59) of this coil (27) is connected to an input of the second signal processing branch (39).

5. Coriolis flowmeter as per Claim 1 where an impedance converter (31) and a preamplifier (33) are arranged between the second connection (57) of the coil (25) of the first sensor (21) and the input of the first signal processing branch (37), and where pre-amplification of the first sensor signal (S1) is controlled in such a way that a real part of the first measuring signal (RE(U$_\Delta$)) disappears, and where an impedance converter (31) and a preamplifier (35) with a prespecified amplification is arranged between the second connection (59) of the coil (27) of the second sensor (23) and the input of the second signal processing branch (39).

6. Coriolis flowmeter as per Claim 1 where a sum or differential amplifier (61) is connected upstream from the second signal processing branch (39). The second sensor signal (S2) and the reference signal (R) are present at the inputs (63, 65) and the auxiliary signal (H) is available at the output.

7. Coriolis flowmeter with

   - at least one measuring tube (3), which is caused to oscillate during operation and through which a medium flows. The flow of this medium is to be measured.
   - a first and a second sensor (21, 23) to determine an oscillation of the measuring tube (3), said oscillation being dependent on the flow, and to generate a first and a second sensor signal (S1, S2)
   - a reference signal generator (48a, 48b) that superimposes a reference signal (R) on the first sensor signal (S1)
   - a first signal processing branch (37) which uses an auxiliary signal (H), which is formed by superimposing the reference signal (R) on the first sensor signal (S1), and the second sensor signal (S2) to derive and condition a first signal (S$_\Delta$) that corresponds to a difference between the auxiliary signal (H) and the second sensor signal (S2)
   - a second signal processing branch (39) which uses the auxiliary signal (H) or the auxiliary signal (H) and the second sensor signal (S2) to derive and condition a second signal (S$_\Sigma$)
   - two sets of two filters (FS$_\Delta$, FR1, FS$_\Sigma$, FR2) the first of which is used to filter out a first conditioned reference signal (R1) and a first measuring signal (U$_\Delta$), which corresponds to a difference in the sensor signals (S1, S2), from the conditioned first signal (S$_\Delta$). The second of these filters is used to filter out a conditioned second reference signal (R2) and a second measuring signal (U$_\Sigma$) from the conditioned second signal (S$_\Sigma$)
   - units (49) that use the first and second conditioned reference signal (R1, R2) to determine a ratio between the gains (V) of the first and second signal processing branch (37, 39)
   - units (51) for determining the flow (M) using the first and second measuring signal (U$_\Delta$, U$_\Sigma$) that take the ratio of the gains (V) into account.

8. Method for determining the ratio of gains (V) of two separate signal processing branches (37, 39) of a Coriolis flowmeter

   - which exhibits a first and a second sensor (21, 23) for determining an oscillation of a measuring tube (3), said oscillation being dependent on the flow, and for generating a first and a second sensor signal (S1, S2) where either
   - a reference signal (R) is superimposed on the second sensor signal (S2),
   - a first signal (S$_\Delta$) is derived and conditioned in the first signal processing branch (37) said signal representing the difference between the first sensor signal (S1) and an auxiliary signal (H) which is formed by superimposing the reference signal (R) on the second sensor signal (S2)
   - a second signal (S$_\Sigma$) is derived and conditioned in the second signal processing branch (39), said signal corresponding to a sum of the first sensor signal (S1) and the auxiliary signal (H) or the auxiliary signal (H) or
   - where a reference signal (R) is superimposed on the first sensor signal (S1)
   - where a first signal (S$_\Delta$) is derived and conditioned in the first signal processing branch (37), said signal representing the difference between an auxiliary signal (H), which is formed by superimposing the reference signal (R) on the first sensor signal (S1), and the second sensor signal (S2)
   - where a second signal (S$_\Sigma$) is derived and conditioned in the second signal processing branch (39), said signal corresponding to a sum of the auxiliary signal (H) and the second sensor signal (S2) or the auxiliary signal (H)

- and where a first and second conditioned reference signal (R1, R2) is filtered out of the first and second signal ($S_\Delta$, $S_\Sigma$), and where the conditioned reference signals (R1, R2) are used to determine the ratio of the gains (V) of the signal processing branches (37, 39).

**9.** Method for determining a flow (M) with the Coriolis flowmeter as per one of the Claims 1 to 8, where the flow (M) is proportional to the ratio of an imaginary part ($Im(U_\Delta)$) of the first measuring signal ($U_\Delta$) and an amount of the second measuring signal ($U_\Sigma$) and is inversely proportional to the ratio of the gains (V).

**10.** Method as per Claim 9 where the ratio of the gains (V) is determined several times and the flow (M) is determined using the average of these ratios (V).

**11.** Method as per Claim 9 where the ratio of the gains (V) is determined several times, the distribution of the ratios (V) is determined and the flow (M) is only determined using the average of the ratios (V) if the ratios (V) are distributed normally and the standard deviation of the ratios (V) is below a specified value.

**12.** Method as per Claim 9 where a reference value ($V_R$) for the ratio of the gains (V) is saved in the flowmeter, and where the measured ratio of the gains (V) is compared to the reference value ($V_R$) and where compensation takes place if a deviation is determined.

**Revendications**

**1.** Débitmètre Coriolis avec - au moins un tube de mesure (3), lequel est excité en vibrations en mode mesure et parcouru par un produit, dont le débit doit être mesuré, - un premier et un deuxième capteur (21, 23) destinés à la mesure d'une vibration du tube de mesure (3) fonction du débit, et destinés à la génération d'un premier et d'un deuxième signal de capteur (S1, S2), - un générateur de signaux de référence (48a, 48b), qui superpose au deuxième signal de capteur (S2) un signal de référence (R), - un premier bras de traitement de signal (37) qui, au moyen du premier signal de capteur (S1) et d'un signal auxiliaire (H) formé par la superposition du deuxième signal de capteur (S2) avec le signal de référence (R), déduit et met en forme un premier signal ($S_\Delta$), qui correspond à une différence du premier signal de capteur (S1) et du signal auxiliaire (H), - un deuxième bras de traitement de signal (39) qui, au moyen du signal auxiliaire (H) déduit et met en forme un deuxième signal ($S_\Sigma$), - deux ensembles, chacun composé de deux filtres ($FS_\Delta$, FR1 ; $FS_\Sigma$, FR2), dont le premier sert à filtrer, à partir du premier signal ($S_\Delta$) mis en forme, un premier signal de référence (R1) mis en forme et un premier signal de mesure ($U_\Delta$) correspondant à une différence des signaux de capteur (S1, S2), et dont le deuxième sert à filtrer, à partir du deuxième signal ($S_\Sigma$) mis en forme, un deuxième signal de référence (R2) mis en forme et un deuxième signal de mesure ($U_\Sigma$), - des moyens (49), qui déterminent, au moyen du premier et du deuxième signal de référence (R1, R2) mis en forme, un rapport des amplifications (V) du premier et du deuxième bras de traitement de signal (37, 39), et - des moyens (51) destinés à la détermination du débit (M) sur la base du premier et du deuxième signal de mesure ($U_\Delta$, $U_\Sigma$), qui tiennent compte du rapport des amplifications (V).

**2.** Débitmètre Coriolis selon la revendication 1, pour lequel - le deuxième signal ($S_\Sigma$) est égal à une somme du premier signal de capteur (S1) et du signal auxiliaire (H), ou - pour lequel un angle de phase entre le premier et le deuxième signal de capteur (S1, S2) est inférieur à environ 10 milliradians, et le deuxième signal ($S_\Sigma$) est égal au signal auxiliaire (H).

**3.** Débitmètre Coriolis selon la revendication 1, pour lequel - le premier bras de traitement de signal (37) comporte un amplificateur différentiel (41) et un convertisseur analogique-numérique ($A/D_\Delta$), et - le deuxième bras de traitement de signal (39) comporte un additionneur (47) ou un amplificateur et un convertisseur analogique-numérique ($A/D_\Sigma$).

**4.** Débitmètre Coriolis selon la revendication 1, pour lequel - les capteurs (21, 23) comportent chacun une bobine (25, 27), - le générateur de signaux de référence (48a, 48b) est relié avec une première connexion (55) de la bobine (27) du deuxième capteur (23), et - une deuxième connexion (59) de cette bobine (27) est reliée avec une entrée du deuxième bras de traitement de signal (39).

**5.** Débitmètre Coriolis selon la revendication 1, pour lequel - entre la deuxième connexion (57) de la bobine (25) du premier capteur (21) et l'entrée du premier bras de traitement de signal (37) sont disposés un convertisseur d'impédance (31) et un amplificateur (33), et une préamplification du premier signal de capteur (S1) est régulée de telle manière qu'une partie réelle du premier signal de mesure ($Re(U_\Delta)$) disparaît, et - entre la deuxième connexion (59) de la bobine (27) du deuxième capteur (23) et l'entrée du deuxième bras de traitement de signal (39) sont disposés un convertisseur d'impédance (31) et un préamplificateur (35) avec une amplification prédéfinie.

**6.** Débitmètre Coriolis selon la revendication 1, pour lequel - un amplificateur sommateur ou différentiel (61) est disposé en amont du deuxième bras de traitement de signal (39), - aux entrées (63, 65) duquel sont appliqués le deuxième signal de capteur (S2) et le signal de référence (R), et à la sortie duquel est disponible le signal auxiliaire (H).

**7.** Débitmètre Coriolis avec - au moins un tube de mesure (3), lequel est excité en vibrations en mode mesure et parcouru par un produit, dont le débit doit être mesuré, - un premier et un deuxième capteur (21, 23) destinés à la mesure d'une vibration du tube de mesure (3) fonction du débit, et destinés à la génération d'un premier et d'un deuxième signal de capteur (S1, S2), - un générateur de signaux de référence (48a, 48b), qui superpose au premier signal de capteur (S1) un signal de référence (R), - un premier bras de traitement de signal (37) qui, au moyen d'un signal auxiliaire (H) formé par la superposition du premier signal de capteur (S1) avec le signal de référence (R) et du deuxième signal de capteur (S2), déduit et met en forme un premier signal ($S_\Delta$), qui correspond à une différence du signal auxiliaire (H) et du deuxième signal de capteur (S2), - un deuxième bras de traitement de signal (39) qui, au moyen du signal auxiliaire (H) ou au moyen du signal auxiliaire et du deuxième signal de capteur (S2) déduit et met en forme un deuxième signal ($S_\Sigma$), - deux ensembles, chacun composé de deux filtres ($FS_\Delta$, FR1 ; $FS_\Sigma$, FR2), dont le premier sert à filtrer, à partir du premier signal ($S_\Delta$) mis en forme, un premier signal de référence (R1) mis en forme et un premier signal de mesure ($U_\Delta$) correspondant à une différence des signaux de capteur (S1, S2), et dont le deuxième sert à filtrer, à partir du deuxième signal ($S_\Sigma$) mis en forme, un deuxième signal de référence (R2) mis en forme et un deuxième signal de mesure ($U_\Sigma$), - des moyens (49), qui déterminent, au moyen du premier et du deuxième signal de référence (R1, R2) mis en forme, un rapport des amplifications (V) du premier et du deuxième bras de traitement de signal (37, 39), et - des moyens (51) destinés à la détermination du débit (M) sur la base du premier et du deuxième signal de mesure ($U_\Delta$, $U_\Sigma$), qui tiennent compte du rapport des amplifications (V).

**8.** Procédé destiné à la détermination d'un rapport d'amplifications (V) de deux bras de traitement de signal (37, 39) séparés d'un débitmètre Coriolis, - qui comporte un premier et un deuxième capteur (21, 23) destinés à la mesure d'une vibration d'un tube de mesure (3) fonction du débit, et destinés à la génération d'un premier et d'un deuxième signal de capteur (S1, S2), pour lequel soit - un signal de référence (R) est superposé au deuxième signal de capteur (S2), - est déduit et mis en forme, dans le premier bras de traitement de signal (37), un premier signal ($S_\Delta$), qui correspond à une différence du premier signal de capteur (S1) et du signal auxiliaire (H) formé par la superposition du deuxième signal de capteur (S2) avec le signal de référence (R), - est déduit et mis en forme, dans le deuxième bras de traitement de signal (39), un deuxième signal ($S_\Sigma$), qui correspond à une somme du premier signal de capteur (S1) et du signal auxiliaire (H) ou au signal auxiliaire (H), soit - un signal de référence (R) est superposé au premier signal de capteur (S1), - est déduit et mis en forme, dans le premier bras de traitement de signal (37), un premier signal ($S_\Delta$), qui correspond à une différence d'un signal auxiliaire (H) formé par la superposition du premier signal de capteur (S1) avec le signal de référence (R) et du deuxième signal de capteur (S2), - est déduit et mis en forme, dans le deuxième bras de traitement de signal (39), un deuxième signal ($S_\Sigma$), qui correspond à une somme du signal auxiliaire (H) et du deuxième signal de capteur (S2) ou du signal auxiliaire (H), et pour lequel - un premier et un deuxième signal de référence (R1, R2) est filtré à partir du premier et du deuxième signal ($S_\Delta$, $S_\Sigma$), et - un rapport des amplifications (V) des bras de traitement de signal (37, 39) est déterminé au moyen des signaux de référence (R1, R2) mis en forme.

**9.** Procédé destiné à la détermination d'un débit (M) à l'aide d'un débitmètre Coriolis selon les revendications 1 à 8, pour lequel le débit (M) est proportionnel à un rapport d'une partie imaginaire ($Im(U_\Delta)$) du premier signal de mesure ($U_\Delta$) et une valeur du deuxième signal de mesure ($U_\Sigma$), et inversement proportionnel au rapport des amplifications (V).

**10.** Procédé selon la revendication 9, pour lequel - le rapport des amplifications (V) est déterminé à plusieurs reprises, et - le débit (M) est déterminé au moyen d'une valeur moyenne des rapports (V).

**11.** Procédé selon la revendication 9, pour lequel - le rapport des amplifications (V) est déterminé à plusieurs reprises, - une distribution des rapports (V) est déterminée, et - le débit (M) est déterminé au moyen d'une valeur moyenne des rapports (V), lorsque les rapports (V) sont normalement distribués et un écart type des rapports (V) se situe sous une valeur prédéfinie.

**12.** Procédé selon la revendication 9, pour lequel - est enregistrée dans le débitmètre une valeur de référence ($V_R$) pour le rapport des amplifications (V), - le rapport mesuré des amplifications (V) est comparé avec la valeur de référence ($V_R$), et - en présence d'un écart, une compensation est effectuée.

EP 1 886 100 B1

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1298421 A1
- EP 97810559 A
- EP 9610942 A
- US 4793191 A
- US 4127028 A
- US 20040025599 A